(19) Europäisches Patentamt
European Patent Office
Office européen des brevets

(11) **EP 2 426 934 A2**

(12) **EUROPEAN PATENT APPLICATION**

(43) Date of publication:
**07.03.2012 Bulletin 2012/10**

(51) Int Cl.:
***H04N 13/00*** *(2006.01)*

(21) Application number: **11175930.4**

(22) Date of filing: **29.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.09.2010 JP 2010196647**

(71) Applicant: **Sony Corporation**
**Tokyo 108-0075 (JP)**

(72) Inventors:
• **Fukazawa, Ryo**
**Minato-ku, Tokyo 108-0075 (JP)**

• **Kitao, Takashi**
**Minato-ku, Tokyo 108-0075 (JP)**
• **Kudo, Yusuke**
**Minato-ku, Tokyo 108-0075 (JP)**
• **Mori, Maki**
**Minato-ku, Tokyo 108-0075 (JP)**

(74) Representative: **Turner, James Arthur**
**D Young & Co LLP**
**120 Holborn**
**London EC1N 2DY (GB)**

(54) **Image processing apparatus, image processing method, and computer program**

(57)    There is provided an image processing apparatus including a drawing position calculation unit for calculating a drawing position of each image of a group of at least two images in a shape being divided at predetermined distance in the width direction so that each of the images is to be displayed on a screen as a stereoscopic image, the shape which is expected to be displayed on a screen as a stereoscopic image, and an image drawing unit for drawing each image of the group of images at the drawing position calculated by the drawing position calculation unit.

**FIG.6**

**Description**

The present disclosure relates to an image processing apparatus, an image processing method, and a computer program.

A time-division driven video display device is a video display device that outputs multiple video streams while sequentially switching video streams in a time-division manner. Examples of such time-division driven video display devices include a time-division stereoscopic video display system using a pair of so-called shutter glasses (for example, see JP H9-138384A, JP 2000-36969A, and JP 2003-45343A) and a multi-video display system using a pair of shutter glasses to allow multiple viewers to view different videos without dividing a screen.

A person extracts and combines a plurality of depth cues from a difference between two-dimensional retina videos obtained by right and left eyes (binocular disparity), thereby perceiving three-dimensional information and recognizing an object as a three-dimensional-like stereoscopic video. Rotational movements of eyeballs change a convergence, i.e., a crossing angle of lines of sight, and a person determines a distance from an object on the basis of the convergence, thus recognizing a space in a three-dimensional manner. Showing an image in a stereoscopic manner using this principle is called a stereoscopic vision. An image shown using each of images for the right and left eyes is called a stereoscopic image. A video shown by preparing a plurality of images for the right and left eyes and continuously changing the plurality of images for the right and left eyes is called a stereoscopic video. An apparatus capable of displaying the stereoscopic images and videos is called a stereoscopic video display device.

The time-division stereoscopic video display system is a video display system using a stereoscopic video display device alternately displaying a left-eye video and a right-eye video on the entire screen in an extremely short cycle and separately providing right and left-eye videos in synchronization with the display cycle of the left-eye video and the right-eye video at the same time. For example, in the shutter glasses method, while the left-eye video is displayed, a left-eye unit of the shutter glasses passes light, and the right-eye unit shields light. On the other hand, while the right-eye video is displayed, the right-eye unit of the shutter glasses passes light, and the left-eye unit shields light.

In order to display an arbitrary object in stereo, two kinds of images are necessary to be generated; an image of the object seen by the right eye and an image of the object seen by the left eye.

The first method is a method for preparing a three-dimensional shape data of the object and viewpoint positions on the right and left of a viewer, and for drawing images for the right and left eyes having an exact binocular disparity by calculation based on positional relationship thereof. In this method, since images are generated by the exact disparity calculation, it is possible to create images for the right and left eyes having a natural stereoscopic effect.

The second method is a method for adding a stereoscopic effect to images not by preparing images separately for the right and left eyes, but by displaying the same image shifting for the right eye and the left eye. Since this method can use a drawing method for ordinary two-dimensional images as it is, the method can be realized on many machines without high calculation cost.

The above first method is capable of creating images for the right and left eyes having a natural stereoscopic effect since the images are created by an exact disparity calculation, however, high calculation cost and a dedicated hardware for drawing, or the like are necessary for three-dimensional calculation and drawing processing performed by the method in order to obtain disparity. For that reason, it is difficult for electrical devices such as a television having only limited processing capacity to realize this method, and the application range of this method is limited only to devices having high processing capacity, such as a personal computer or the like having a high-performing CPU and a graphic board.

Further, while the above second method can be realized on many devices without high calculation cost, however, there is an issue that since images to be reflected on the right and left eyes are exactly identical, it tends to be seen an average image emerged in space not an exact stereoscopic model.

Therefore, regarding a stereoscopic video display apparatus for displaying a stereoscopic video, it is expected for a method to be able to further improve the stereoscopic effect without high calculation cost.

In light of the foregoing, it is desirable to provide an image processing apparatus, image processing method, and computer program, which are novel and improved, and which are able to further improve a stereoscopic effect of an object by simple calculation and to display the object on a screen.

Various respective aspects and features of the invention are defined in the appended claims. Combinations of features from the dependent claims may be combined with features of the independent claims as appropriate and not merely as explicitly set out in the claims.

According to an embodiment of the present disclosure, there is provided an image processing apparatus including a drawing position calculation unit for calculating a drawing position of each image of a group of at least two images in a shape being divided at predetermined distance in the width direction so that each of the images is to be displayed on a screen as a stereoscopic image, the shape which is expected to be displayed on a screen as a stereoscopic image, and an image drawing unit for drawing each image of the group of images at the drawing position calculated by the drawing position calculation unit.

The image processing apparatus may further include an image dividing unit for dividing a shape, which is expected to be displayed on a screen as a stereoscopic image, at predetermined distance in the width direction, and for generating a group of at least two images. The drawing position calculation unit may calculate a drawing position of each image of a group of at least two images generated by the image dividing unit so that each of the images is to be displayed on a screen as a stereoscopic image.

The image dividing unit may calculate a distance in the width direction of the group of images and a gap of drawing positions between an innermost image and a second innermost image when generating the group of images.

The image processing apparatus may further include an image storage unit for storing a group of at least two images generated by the image dividing unit. The drawing position calculation unit may calculate a drawing position of each image of a group of at least two images stored in the image storage unit so that each of the image is to be displayed on a screen as a stereoscopic image.

The image dividing unit may store the generated image in the image storage unit while linking the image to information identifying a shape which is expected to be displayed on a screen as a stereoscopic.

The image dividing unit may calculate a distance in the width direction of the group of images and a gap of drawing positions between an innermost image and a second innermost image when generating the group of images, and stores a result of calculation in the image storage unit.

The drawing position calculation unit may calculate a drawing position of a third innermost or further inner images using the distance in the width direction of the group of images and the gap of drawing positions between the innermost image and the second innermost image.

The information of the gap of drawing positions may be added to the group of images in advance.

Calculation, which is performed by the drawing position calculation unit, of drawing positions of each image to be displayed as a stereoscopic image may be calculating the drawing positions of images for the right and left eyes with predetermined disparity.

Further, according to another embodiment of the present disclosure, there is provided a method for image processing which includes calculating a drawing position of each image of a group of at least two images in a shape being divided at predetermined distance in the width direction so that each of the images is to be displayed on a screen as a stereoscopic image, the shape which is expected to be displayed on a screen as a stereoscopic image, and drawing each image of the group of images at the drawing position calculated in the step of calculating the drawing position.

Further, according to another embodiment of the present disclosure, there is provided a computer program to cause a computer to execute calculating a drawing position of each image of a group of at least two images in a shape being divided at predetermined distance in the width direction so that each of the images is to be displayed on a screen as a stereoscopic image, the shape which is expected to be displayed on a screen as a stereoscopic image, and drawing each image of the group of images at the drawing position calculated in the step of calculating the drawing position.

According to the embodiment above of the present disclosure described above, it is possible to provide an image processing apparatus, image processing method, and computer program, which are novel and improved, and which are able to further improve a stereoscopic effect of an object by simple calculation and to display the object on a screen.

Embodiments of the invention will now be described with reference to the accompanying drawings, throughout which like parts are referred to by like references, and in which:

FIG. 1 is an explanatory diagram illustrating a principle of stereoscopic vision achieved by a stereoscopic display device;

FIG. 2 is an explanatory diagram illustrating a principle of stereoscopic vision achieved by a stereoscopic display device;

FIG. 3 is an explanatory diagram illustrating a principle of stereoscopic vision achieved by a stereoscopic display device;

FIG. 4 is an explanatory diagram illustrating a configuration of a video display system 10 according to an embodiment of the present disclosure;

FIG. 5 is an explanatory diagram illustrating a functional configuration of a display device 100 according to an embodiment of the present disclosure;

FIG. 6 is an explanatory diagram illustrating a configuration of a video signal control unit 120 included in the display device 100 according to an embodiment of the present disclosure;

FIG. 7A is an explanatory diagram illustrating an example of a shape that is expected to be displayed as a stereoscopic image on an image display unit 110;

FIG. 7B is an explanatory diagram schematically illustrating an aspect of images of an image of pot 160 illustrated in FIG. 7A divided in the depth direction in a predetermined distance;

FIG. 8 is a flow chart illustrating an operation of the display device 100 according to an embodiment of the present disclosure;

FIG. 9 is an explanatory diagram illustrating calculation processing for drawing positions of images by a drawing position calculation unit 121;

FIG. 10 is an explanatory diagram illustrating a configuration of the video signal control unit 120 included in the display device 100 according to an embodiment ofthe present disclosure; and

FIG. 11 is a flow chart illustrating an operation of the display device 100 according to an embodiment of the present disclosure.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The following explanation will be made in the order listed below.

<1. Principle of stereoscopic vision>
<2. An embodiment of the present disclosure>

[2-1. Configuration of video display system according to an embodiment of the present disclosure]
[2-2. Functional configuration of display device according to the embodiment of the present disclosure]
[2-3. Operation of display device according to embodiment of the present disclosure]

<3. Conclusion>

<1. Principle of stereoscopic vision>

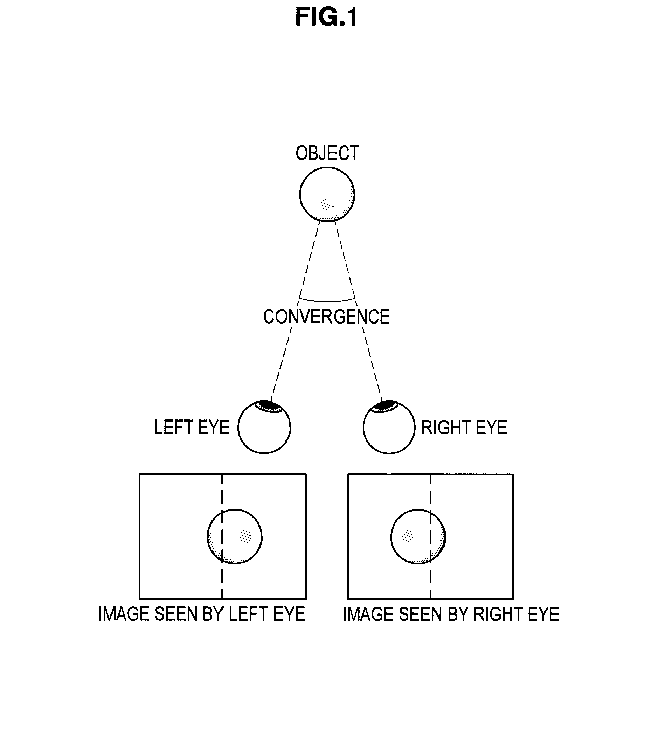

First, a principle of stereoscopic vision used in a stereoscopic display device will be explained with reference to the drawings. As shown in FIG. 1, a person extracts and combines a plurality of depth cues from a difference between two-dimensional retina videos obtained by right and left eyes (binocular disparity), thereby perceiving three-dimensional information and recognizing an object as a three-dimensional-like stereoscopic video.

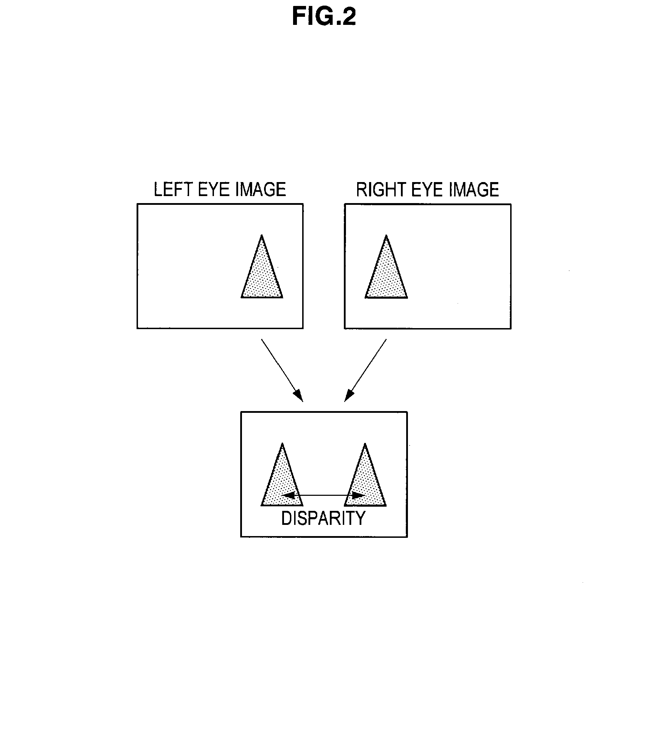

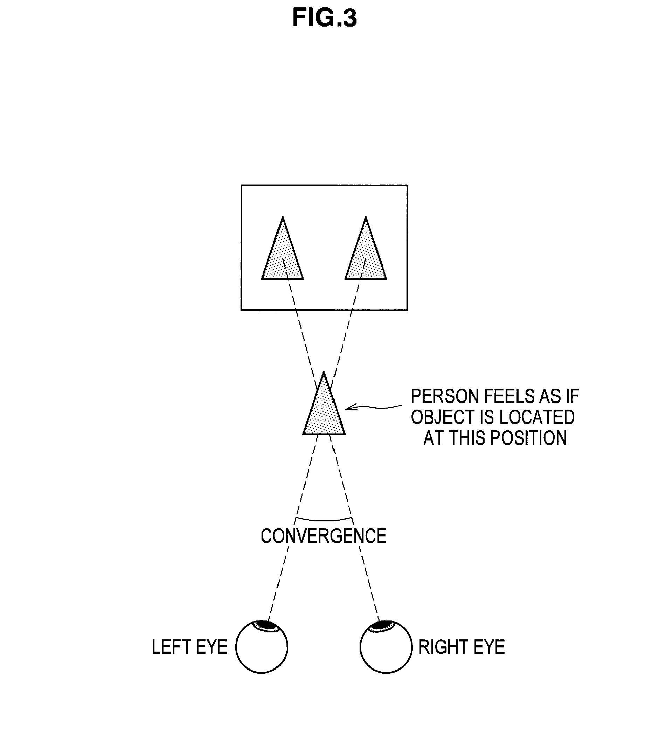

Rotational movements of eyeballs change a convergence as shown in FIG. 1, and a person determines a distance from an object on the basis of the convergence, thus recognizing a space in a three-dimensional manner. As shown in FIG. 1, the convergence is a crossing angle of lines of sight. Using the above human nature, two of two-dimensional images given with disparity for right and left eyes are prepared as shown in FIG. 2, and the planar images are separately projected onto the right and left eyes. This creates an illusion of the distance from the object as shown in FIG. 3 on the basis of the convergence, whereby a person can recognize the image in a stereoscopic manner. The disparity is the amount of displacement between the images for the right and left eyes as shown in FIG. 2. Using this principle, the image can be shown in a stereoscopic manner.

<2. An embodiment of the present disclosure>

[2-1. Configuration of video display system according to an embodiment of the present disclosure]

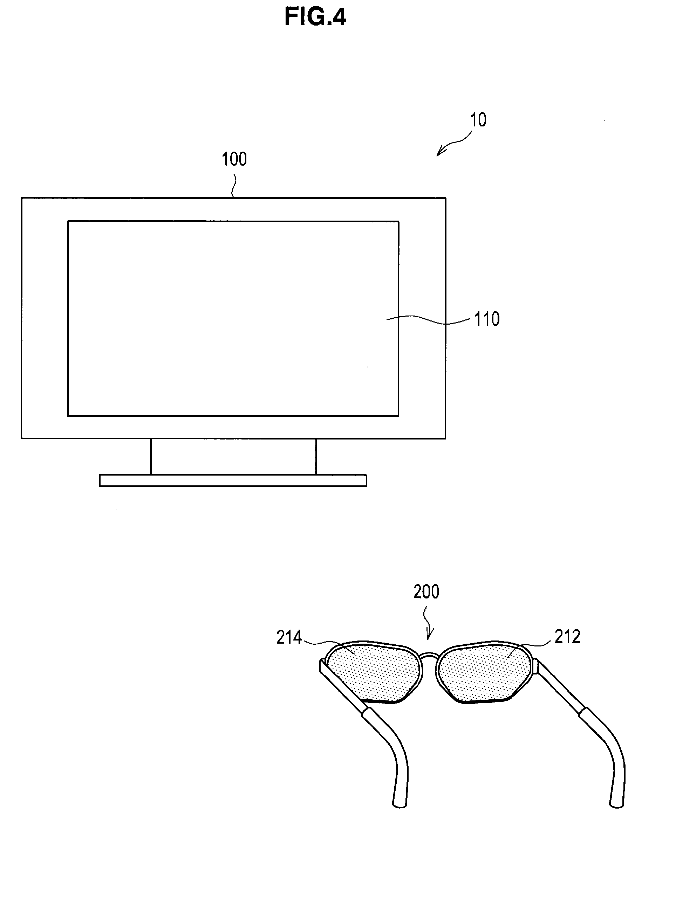

Hereinafter, an explanation will be given on a video display system according to an embodiment of the present disclosure. First, a configuration of a video display system according to the embodiment of the present disclosure will be explained. FIG. 4 is an explanatory diagram schematically illustrating a configuration of the video display system 10 according to the embodiment. FIG. 4 also shows the display device 100 and a pair of shutter glasses 200 that is used when a viewer perceives an image displayed on the display device 100 as a stereoscopic image. The video display system 10 is constituted by the display device 100 and the shutter glasses 200.

The display device 100 shown in FIG. 4 includes an image display unit 110 for displaying an image. The display device 100 is a device that can display not only a normal image on the image display unit 110 but also a stereoscopic image perceived as a three-dimensional image by a viewer on the image display unit 110.

Although the configuration of the image display unit 110 will be explained later in detail, the configuration of the image display unit 110 is briefly explained here. The image display unit 110 is configured to include a light source, a liquid crystal panel, and a pair of polarization plates provided to sandwich the liquid crystal panel. A light emitted by the light source is passed through the liquid crystal panel and the polarization plate to be converted into a light polarized in a predetermined direction.

The shutter glasses 200 is configured to include a right eye image transmission unit 212 and a left eye image transmission unit 214, which are made of, for example, liquid crystal shutters. The shutter glasses 200 perform opening and closing operations of the right eye image transmission unit 212 and the left eye image transmission unit 214 each made of the liquid crystal shutter, in response to a signal transmitted from the display device 100. The opening and closing operations performed by the right eye image transmission unit 212 and the left eye image transmission unit 214 are executed by a shutter control unit 130. The viewer can perceive an image displayed on the image display unit 110 as a stereoscopic image, by looking at the light emitted from the image display unit 110 through the right eye image transmission unit 212 and the left eye image transmission unit 214 of the shutter glasses 200.

On the other hand, when a normal image is displayed on the image display unit 110, the viewer can perceive the image as the normal image by seeing the light output from the image display unit 110 as it is.

In FIG. 4, the display device 100 is shown as a television receiver, but it should be understood that the shape of the display device is not limited to such an example in the present disclosure. For example, the display device according to the present disclosure may be, for example, a monitor that is used by being connected to another electronic device such as a personal computer or the like, or it may be a mobile game machine, a mobile telephone, or a portable music playback device.

As above, the configuration of the video display system 10 according to an embodiment of the present disclosure has been explained. Next, an explanation will be given on a functional configuration of the display device 100 according to the embodiment of the present disclosure.

[2-2. Functional configuration of display device according to an embodiment of the present disclosure]

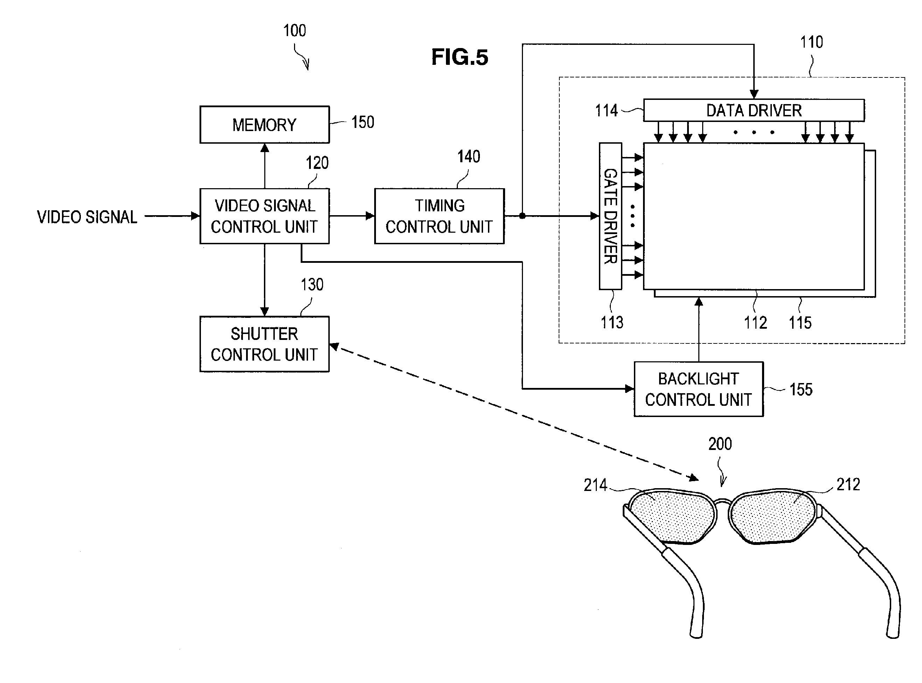

FIG. 5 is an explanatory diagram illustrating a functional configuration of the display device 100 according to an embodiment of the present disclosure. Hereinafter, an explanation will be given on a functional configuration of the display device 100 according to the embodiment of the present disclosure using FIG. 5.

As shown in FIG. 5, the display device 100 according to the embodiment of the present disclosure is configured to include the image display unit 110, a video signal control unit 120, the shutter control unit 130, a timing control unit 140, a memory 150, and a backlight control unit 155.

The image display unit 110 displays images in the manner described above, and when a signal is applied from an external source, images are displayed in accordance with the applied signal. The image display unit 110 is configured to include a display panel 112, a gate driver 113, a data driver 114, and a backlight 115.

The display panel 112 displays images in accordance with the signal applied from an external source. The display panel 112 displays images by sequentially scanning a plurality of scanning lines. Liquid crystal molecules having a predetermined orientation are filled in a space between transparent plates, made of glass or the like, of the display panel 112. A drive system of the display panel 112 may be a twisted nematic (TN) system, a vertical alignment (VA) system, or an in-place-switching (IPS) system. In the following explanation, the drive system of the display panel 112 is the VA system, unless otherwise specified, but it is to be understood that the present disclosure is not limited to this example. It should be noted that the display panel 112 according to the present embodiment is a display panel that can rewrite the screen at a high-speed frame rate (120 Hz or 240 Hz, for example). In the present embodiment, an image for the right eye and an image for the left eye are displayed alternately on the display panel 112 with a predetermined timing, thereby causing the viewer to perceive a stereoscopic image.

The gate driver 113 is a driver that drives a gate bus line (not shown in the figures) of the display panel 112. A signal is transmitted from the timing control unit 140 to the gate driver 113, and the gate driver 113 outputs a signal to the gate bus line in accordance with the signal transmitted from the timing control unit 140.

The data driver 114 is a driver that generates a signal that is applied to a data line (not shown in the figures) of the display panel 112. A signal is transmitted from the timing control unit 140 to the data driver 114. The data driver 114 generates a signal to be applied to the data line, in accordance with the signal transmitted from the timing control unit 140, and outputs the generated signal.

The backlight 115 is provided on the furthermost side of the image display unit 110 as seen from the side of the viewer. When an image is displayed on the image display unit 110, white light that is not polarized (unpolarized light) is output from the backlight 115 to the display panel 112 positioned on the side of the viewer. The backlight 115 may use a light-emitting diode, for example, or may use a cold cathode tube. It should be noted that the backlight 115 shown in FIG. 2 is a surface light source, but the present disclosure is not limited to such an example. For example, the light source may be arranged around the peripheral portions of the display panel 112, and may output light to the display panel 112 by diffusing the light from the light source using a diffuser panel and the like. Alternatively, for example, a point light source and a condenser lens may be used in combination in place of the surface light source.

When the video signal control unit 120 receives a transmission of a video signal from an external source outside of the video signal control unit 120, the video signal control unit 120 executes various kinds of signal processing on the received video signal to output so that the video signal becomes suitable for displaying a three-dimensional image in the image display unit 110. The video signal processed by the video signal control unit 120 is transmitted to the timing control unit 140. When the video signal control unit 120 executes the signal processing, the video signal control unit 120 transmits a predetermined signal to the shutter control unit 130 in accordance with the signal processing. Examples of signal processings performed by the video signal control unit 120 include the following processings.

When a video signal to display the image for the right eye (a right-eye video signal) on the image display unit 110 and a video signal to display the image for the left eye (a left-eye video signal) on the image display unit 110 are transmitted to the video signal control unit 120, the video signal control unit 120 generates, from the two received video signals, a video signal for a three-dimensional image. In the present embodiment, the video signal control unit 120 generates, from the received right-eye video signal and the left-eye video signal, video signals to display images on the display panel 112 in the following order in a time-division manner: image for the right eye, image for the right eye, image for the left eye, image for the left eye, image for the right eye, image for the right eye, and so on.

The shutter control unit 130 receives the predetermined signal that is generated in accordance with the signal processing performed by the video signal control unit 120, and generates a shutter control signal that controls shutter operation of the shutter glasses 200 in accordance with the predetermined signal. The shutter glasses 200 perform opening and closing operations of the right eye image transmission unit 212 and the left eye image transmission unit 214, on the basis of the shutter control signal that is generated by the shutter control unit 130 and transmitted wirelessly based on, for example, IEEE802.15.4. The backlight control unit 155 receives a predetermined signal generated based on the signal processing performed by the video signal control unit 120, and generates a backlight control signal for controlling lighting operation of the backlight according to the signal.

In accordance with the signal transmitted from the video signal control unit 120, the timing control unit 140 generates a pulse signal that is used to operate the gate driver 113 and the data driver 114. When the pulse signal is generated by the timing control unit 140, and the gate driver 113 and the data driver 114 receive the pulse signal generated by the timing control unit 140, an image corresponding to the signal transmitted from the video signal control unit 120 is displayed on the display panel 112.

The memory 150 stores computer programs for operating the display device 100, and various setting of the display device 100, or the like. Further, in the present embodiment, it stores data of image (for example, image of icon, or the like) expected to be displayed by the image display unit 110 as a stereoscopic image. Using the images stored in the memory 150, the video signal control unit 120 performs image drawing processing for causing the image display unit 110 to display as a stereoscopic image.

As above, the functional configuration of the display device 100 according to an embodiment of the present disclosure has been explained. Subsequently, an explanation will be given on a configuration of the video signal control unit 120 included in the display device 100 according to the embodiment of the present disclosure.

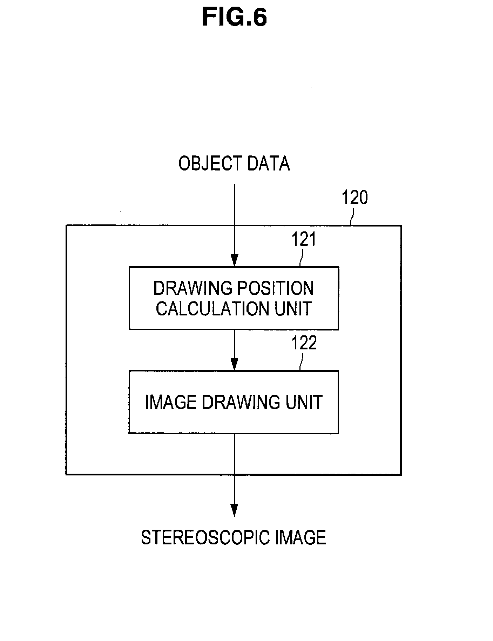

FIG. 6 is an explanatory diagram illustrating a configuration of the video signal control unit 120 included in the display device 100 according to the embodiment of the present disclosure. Hereinafter, with reference to FIG. 6, an explanation will be given on the configuration of the video signal control unit 120 included in the display device 100 according to the embodiment of the present disclosure.

As shown in FIG. 6, the video signal control unit 120 included in the display device 100 according to the embodiment of the present disclosure is configured to include a drawing position calculation unit 121 and an image drawing unit 122.

The drawing position calculation unit 121 is to calculate a drawing position for causing the image display unit 110 to display an object as a stereoscopic image using information of the object data supplied by the external source outside of the video signal control unit 120. The calculation of the drawing position executed by the drawing position calculation unit 121 is calculation processing of drawing positions of images for the right and left eyes to be displayed on the image display unit 110 with predetermined disparity between the images for the right and left eyes. After calculating a drawing position of images, the drawing position calculation unit 121 transmits information of the drawing position to the image drawing unit 122.

The image drawing unit 122 is to execute processing for drawing images based on information on drawing positions of images, the drawing positions which is calculated by the drawing position calculation unit 121, for displaying an object as a stereoscopic image. When the image drawing unit 122 executes processing for drawing images based on information on drawing positions of the images, the images is to be displayed on the image display unit 110 as a stereoscopic image.

The present embodiment prepares groups of plurality of images in a shape being divided by each depth and being expected to be displayed on the image display unit 110 as a stereoscopic image. Further, depending upon the position on the screen, the image drawing unit 122 draws each image of this group of images shifting them appropriately so as to create disparity images without any sense of unpleasant in high speed.

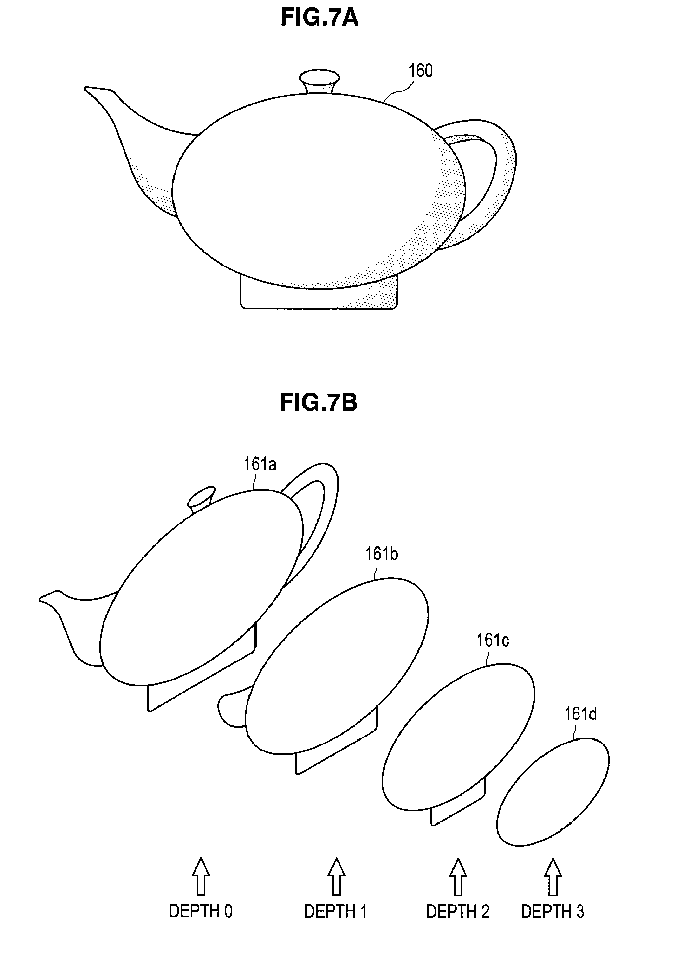

FIG. 7A is an explanatory diagram illustrating an example of a shape that is expected to be displayed as a stereoscopic image on the image display unit 110, and an image of a pot 160 is illustrated. The images for the right and left eyes having an exact binocular disparity can be drawn by preparing three-dimensional shape data (data of XYZ space) of this image 160 as well as viewpoint positions on the right and left of a viewer, and by calculating based on positional relationship thereof. However, as described above, to execute an exact calculation of the three-dimensional shape data needs extremely high calculation cost and a dedicated hardware for drawing.

Therefore, in the present embodiment, as described above, groups of plurality of images in a shape being divided by each depth and being expected to be displayed on the image display unit 110 as a stereoscopic image are prepared in advance, and the image drawing unit 122 calculates a drawing position to cause the image to be displayed as a three-dimensional image.

FIG. 7B is an explanatory diagram schematically illustrating an aspect of images of the image of pot 160 illustrated in FIG. 7A divided in a predetermined distance, for example, in equal distances in the depth direction. In FIG. 7B, an image 161a, 161b, 161c, and 161d of cross-section surfaces which are four quarters of the image of a pot 160 illustrated in FIG. 7A equally divided in the depth direction.

The object data is configured by groups of values in depth corresponding to a plurality of images indicating shapes of each depth of the object, and a virtual three-dimensional coordinate (where the object is arranged in a space expressed as a stereoscopic video) in the stereoscopic video of the object itself. The image of the object data may be created in advance manually, or may be created by calculation based on the three-dimensional data of the object.

The drawing position calculation unit 121 calculates drawing positions to cause the image display unit 110 to be displayed as a stereoscopic image with respect to the images 161a, 161b, 161c, and 161d respectively. By doing this, each of the images 161a, 161b, 161c, and 161d is to be displayed having a predetermined disparity, and a user can recognize the image of a pot 160 shown in FIG. 7A as a stereoscopic image by looking the images 161a, 161b, 161c, and 161d displayed on the image display unit 110 having the predetermined disparity through the shutter glasses 200.

As above, the configuration of the video signal control unit 120 included in the display device 100 according to an embodiment of the present disclosure has been explained. Subsequently, an explanation will be given on an operation of the display device 100 according to the embodiment of the present disclosure.

[2-3. Operation of display device according to an embodiment of the present disclosure]

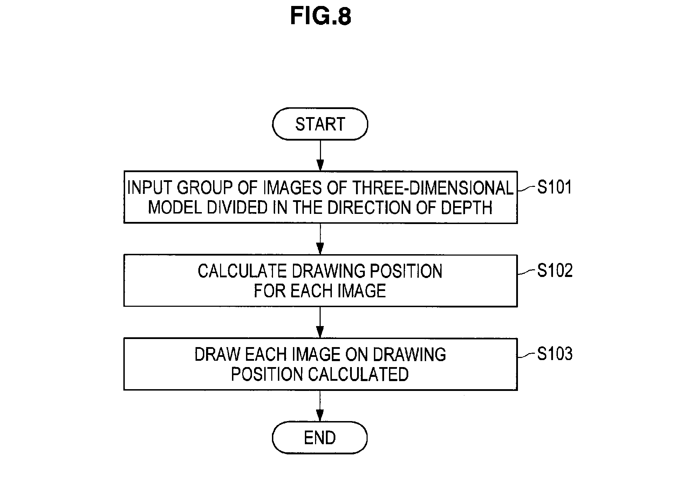

FIG. 8 is a flow chart illustrating an operation of the display device 100 according to an embodiment of the present disclosure. The flow chart illustrated in FIG. 8 shows image processing by the video signal control unit 120 for an image expecting the image display unit 110 to display as a stereoscopic image. Hereinafter, with reference to FIG. 8, an explanation will be given on an operation of the display device 100 according to the embodiment of the present disclosure.

At first, group of images dividing a three-dimensional model of the object expected to be displayed as a stereoscopic image in the depth direction is to be input to the video signal control unit 120 (step S101). The group of the images may be stored, for example, in the memory 150, or may be in the shape where it is included in video signals being broadcast by broadcast stations.

When the group of images dividing a three-dimensional model of the object expected to be displayed as a stereoscopic image in the depth direction is input into the video signal control unit 120, the drawing position calculation unit 121 calculates a drawing position for each of the images input into the video signal control unit 120 (step S102).

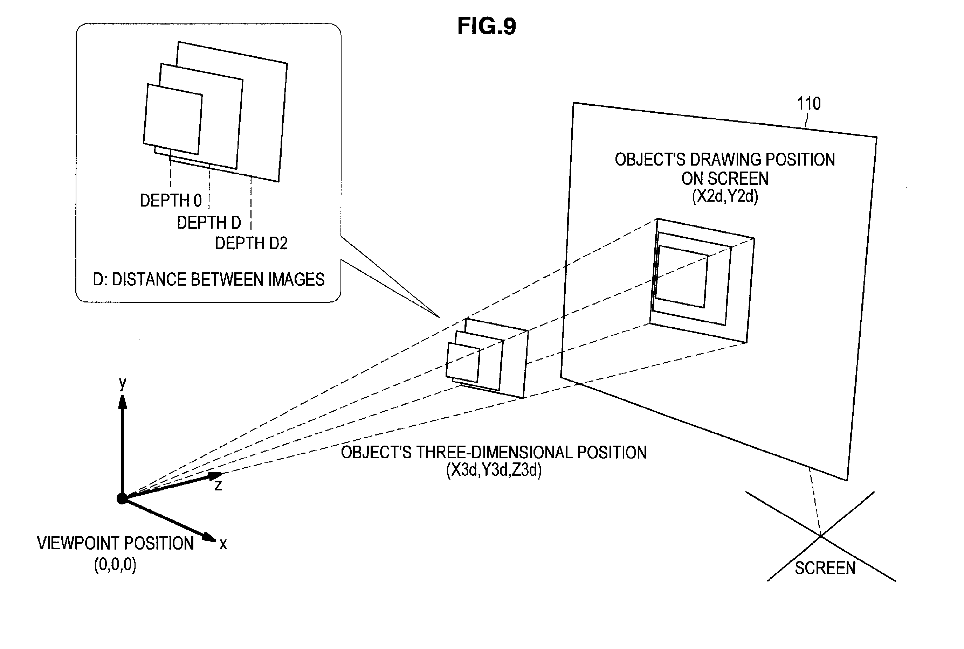

FIG. 9 is an explanatory diagram illustrating calculation processing for drawing positions of images by the drawing position calculation unit 121. In the present embodiment, coordinate of a viewpoint position is set to the origin (0, 0, 0), a three-dimensional position of an object is set to (S3d, Y3d, Z3d), and a drawing position of the object in the image display unit 110 is set to (X2d, Y2d).

The drawing position calculation unit 121 calculates a two-dimensional coordinate of images for the right and left eyes of each image using the following formulas based on a relative coordinate from virtually defined positions of the right and left eyes to which three-dimensional coordinates included in the object are transformed, and information on depth of each image.

$$X2d = X3d / (Z3d + depth) * \text{coefficient } x$$

$$Y2d = Y3d / (Z3d + depth) * \text{coefficient } y$$

Coefficient x and coefficient y are coefficients for adjusting parsing size in transformation, and may use any arbitrary value larger than 0. Further, the value of width corresponds to 0, D, 2D shown in FIG. 9.

In addition, the relativized three dimensional coordinate sets the virtual viewpoint position as the origin, the inner direction of a screen as +Z, the upper direction of the screen as +Y, and the right direction of the screen as +X. The two-dimensional coordinate also sets the center of the screen as the origin, the right direction as +X, and the upper direction as +Y.

If distances (D) between each image divided as shown FIG. 9 are equal, the drawing position calculation unit 121 may simplify the drawing position calculation using the following procedure so as to obtain approximate drawing positions.

At first, the drawing position calculation unit 121 calculates the drawing position of an image where depth = 0 using the above formulas. Similarly, the drawing position calculation unit 121 calculates the drawing position of an image where depth = D. Subsequently, the drawing position calculation unit 121 calculates the gap (set as dx) between the drawing positions when the depth is shifted for D using the gap of drawing positions between the image where depth = 0 and the image where depth = D.

Subsequent drawing positions of images, such as the one where depth is 2D, 3D, or the like are calculated using the gap of drawing position dx for the one of depth D calculated as above. For example, the gap of drawing position for the one of depth D becomes 2dx, while the gap of drawing position for the one of depth 3D becomes 3dx.

Further, when using such simplified formula as above, the gap of drawing position dx in case where depth D changed may be calculated as an approximate fixed value so as to be provided as object data paired with an image. This further reduces the cost for drawing position calculation by the drawing position calculation unit 121.

When the drawing position calculation unit 121 calculates the drawing position for each of images being input to the video signal control unit 120 in the above step S102, subsequently the image drawing unit 122 executes processing of drawing images based on the information on drawing position of images for displaying the object as a stereoscopic image, the drawing position that the drawing position calculation unit 121 calculated (step S103). When the image drawing unit 122 executes processing of drawing images in step S103, the images being input in the video signal control unit 120 can be displayed as a stereoscopic image on the image display unit 110.

As above, the operation of the display device according to an embodiment of the present disclosure has been explained. Subsequently, an explanation will be given on modified examples of the video signal control unit 120 included in the display device 100 according to the embodiment of the present disclosure.

Information may be provided not on images of an object divided by a predetermined distance in the depth direction, but on three dimensional data of the object (three dimensional model) depending upon the data format of the object. In such cases, as preparation prior to the above-described processing of calculating drawing position, drawing images, or the like, cross-sectional diagrams of stereoscopic shape of three-dimensional model may be created, enabling the image processing according to the present embodiment applicable to reduce the calculation cost for the subsequent drawings. As the divided images, the cross-sectional diagrams at the time when the three-dimensional model is divided in the Z direction in a predetermined distance (equally spaced, for example) are used. At this time, if the dividing distance in the Z direction becomes narrower, a stereoscopic image closer to the three-dimensional model can be generated, if the dividing distance becomes broader, faster drawing can be achieved.

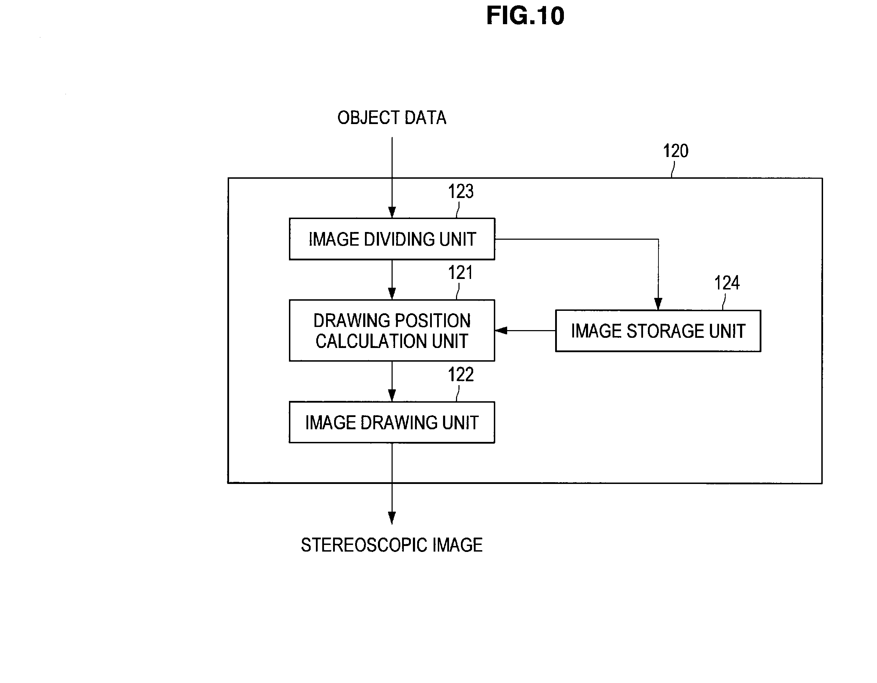

FIG. 10 is an explanatory diagram illustrating modified examples of the video signal control unit 120 included in the display device 100 according to the embodiment of the present disclosure. Hereinafter, with reference to FIG. 10, an explanation will be given on the modified examples ofthe video signal control unit 120 included in the display device 100 according to the embodiment of the present disclosure.

As shown in FIG. 10, the modified examples of the video signal control unit 120 included in the display device 100 according to an embodiment of the present disclosure is configured to include a drawing position calculation unit 121, a image drawing unit 122, an image dividing unit 123, and an image storage unit 124.

The video signal control unit 120 shown in FIG. 10 is to create the cross-sectional diagrams in a stereoscopic shape of the three-dimensional model based on three-dimensional shape data of the object that has been provided, not on the images divided by depth. Therefore, comparing to the video signal control unit 120 shown in FIG. 6, the one shown in FIG. 10 has been added by the image dividing unit 123 for creating cross-sectional diagrams in a stereoscopic shape of the three-dimensional model from the three-dimensional shape data, and the image storage unit 124 for storing images that the image dividing unit 123 generated.

The image dividing unit 123 is to use the three-dimensional shape data being input in the video signal control unit 120 to generate images divided in predetermined distance in the depth direction (direction Z) as shown in FIG. 7B. When the image dividing unit 123 generates the images divided in the predetermined distance in the depth direction (direction Z), it transmits the generated group of images to the drawing position calculation unit 121 while storing the generated group of images in the image storage unit 124.

The drawing position calculation unit 121 calculates a drawing position for causing the image display unit 110 to display the image, which the image dividing unit 123 has generated, or which the image dividing unit 123 has generated and stored in the image storage unit 124, as a stereoscopic image. This enables each of the plurality of images that the image dividing unit 123 has generated to be displayed on the image display unit 110 having a predetermined disparity. Subsequently the user can recognize the three-dimensional shape data of the object being input to the video signal control unit 120 as a stereoscopic image by looking the plurality of images generated by the image dividing unit 123 through the shutter glasses 200.

FIG. 10 shows a configuration having the image storage unit 124 for storing cross-sectional images in a stereoscopic shape of the three-dimensional model that the image dividing unit 123 has generated in the video signal control unit 120, however, the present disclosure is not limited to this example. For example, it may be a form where the cross-sectional images in a stereoscopic shape of the three-dimensional model that the image dividing unit 123 has generated are to be stored in the memory 150.

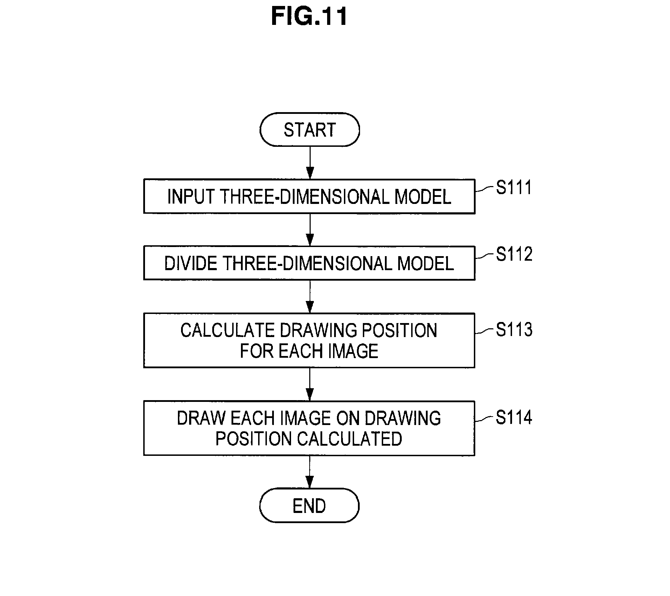

Next, an operation of the video signal control unit 120 shown in FIG. 10 will be explained. FIG. 8 is a flow chart illustrating the operation of the display device 100 according to an embodiment of the present disclosure. The flow chart illustrated in FIG. 11 shows image processing by the video signal control unit 120 shown in FIG. 10 for an image expecting the image display unit 110 to display as a stereoscopic image. Hereinafter, with reference to FIG. 11, an explanation will be given on an operation of the display device 100 according to the embodiment of the present disclosure.

When the three-dimensional shape data is input in the video signal control unit 120 (step S111), the image dividing unit 123 generates images divided in a predetermined distance in the depth direction based on the three-dimensional data being input (step S112). For example, when the three-dimensional data similar to the reference sign 160 in FIG. 7A is input in the video signal control unit 120, the image dividing unit 123 generates images divided in the predetermined distance in the depth direction as shown in FIG. 7B.

When the image dividing unit 123 generates images divided in the predetermined distance in the depth direction based on the three-dimensional data being input in the above step S 112, subsequently the drawing position calculation unit 121 calculates a drawing position for each image that the image dividing unit 123 has generated (step S113).

When the drawing position calculation unit 121 calculates the drawing position for each of images being input to the image dividing unit 123 in the above step S 113, subsequently the image drawing unit 122 executes processing of drawing images based on the information on drawing position of images for displaying the object as a stereoscopic image, the drawing position that the drawing position calculation unit 121 calculated (step S 114). When the image drawing unit 122 executes processing of drawing images in step S 114, the three-dimensional data being input in the video signal control unit 120 can be displayed as a stereoscopic image on the image display unit 110.

As described above, using the three-dimensional shape data being input in the video signal control unit 120, the video signal control unit 120 generates images divided in the predetermined distance in the depth direction (direction Z) shown as FIG. 7B and calculates the drawing position of the images for displaying the object as a stereoscopic image with respect to each of the images. This reduces the calculation cost for drawing images in case of displaying it as a stereoscopic image even in the case where the three-dimensional shape data is input in the video signal control unit 120.

As described above, the modified examples of the video signal control unit 120 included in the display device 100 according to an embodiment of the present disclosure have been explained.

<3. Conclusion>

As described above, the display device 100 according to an embodiment of the present disclosure calculates drawing positions in order to display a group of images, which is dividing the three-dimensional model of the object expected to be displayed as a stereoscopic image in the depth direction, as a stereoscopic image on the image display unit 110. The video signal control unit 120 displays the group of images on the calculated drawing position of the image display unit 110.

This enables the display device 100 according to an embodiment of the present disclosure to display an object expected to be displayed as a stereoscopic image on the image display unit 110 using a simple calculation.

The display device 100 according to the embodiment of the present disclosure can generate a group of images dividing a three-dimensional model in the depth direction based on the three-dimensional model of an object expected to be displayed as a stereoscopic image, and calculates drawing positions for causing the group of images to be displayed as a stereoscopic image on the image display unit 110. This enables the display device 100 according to the embodiment of the present disclosure to transform the three-dimensional model of the object expected to be displayed as a stereoscopic image using a simple calculation to display on the image display unit 110.

The operation of the display device 100 according to the embodiment of the present disclosure described above may be performed by hardware or may be performed by software. If the operation of the display device 100 according to the embodiment of the present disclosure described above is performed by software, the above-described operation may be performed by a CPU or other control device having medium on which computer programs are recorded inside the display device 100, and reading out the computer program from the medium to sequentially execute.

It should be understood by those skilled in the art that various modifications, combinations, subcombinations and alterations may occur depending on design requirements and other factors insofar as they are within the scope of the appended claims.

For example, in the above embodiment, the display device 100 has been explained as an example where a user views an image displayed on the display device 100 through the shutter glasses 200 and perceives the image as a three-dimensional image. However, the present disclosure is not limited to such an example. Likewise, the present disclosure can also be applied to a video display device where a user directly views an image displayed on the display device 100 and recognizes the image as a three-dimensional image.

Further, for example, in the above embodiment, when the three-dimensional shape data is input in the video signal control unit 120, images divided in a predetermined distance in the depth direction (direction Z) are generated, and a drawing position of the images for displaying the object as a stereoscopic image with respect to each of the images is calculated. However, as far as the images divided in a predetermined distance in the depth direction has already been generated from the three-dimensional shape data, the divide images necessarily need to be generated again, therefore, it is enough to read the images from the image storage unit 124. At that time, information for identifying three-dimensional shape data being input in the video signal control unit 120 may be generated, or information for identifying the three-dimensional shape data may be added to the three-dimensional shape data in advance to supply to the video signal control unit 120. When the video signal control unit 120 store divided images in the image storage unit 124, it may store the divided images linking with the information identifying the three-dimensional shape data.

Further, in the above embodiment, for example, when the three-dimensional shape data is input to the video signal control unit 120, images divided in a predetermined distance in the depth direction (direction Z) are generated to calculate drawing positions of the images for displaying an object as a stereoscopic image with respect to each of the images. However, at a time of generating the divided images, information on a gap of the drawing positions between the innermost image and the second innermost image may be stored in the image storage unit 124.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present disclosure contains subject matter related to that disclosed in Japanese Priority Patent Application JP 2010-196647.

**Claims**

1. An image processing apparatus comprising:

    a drawing position calculation unit for calculating a drawing position of each image of a group of at least two images in a shape being divided at predetermined distance in the width direction so that each of the images is to be displayed on a screen as a stereoscopic image, the shape which is expected to be displayed on a screen as a stereoscopic image; and
    an image drawing unit for drawing each image of the group of images at the drawing position calculated by the drawing position calculation unit.

2. The image processing apparatus according to claim 1, further comprising an image dividing unit for dividing a shape, which is expected to be displayed on a screen as a stereoscopic image, at predetermined distance in the width direction, and for generating a group of at least two images,
    wherein the drawing position calculation unit calculates a drawing position of each image of a group of at least two images generated by the image dividing unit so that each of the images is to be displayed on a screen as a stereoscopic image.

3. The image processing apparatus according to claim 2,
    wherein the image dividing unit calculates a distance in the width direction of the group of images and a gap of drawing positions between an innermost image and a second innermost image when generating the group of images.

4. The image processing apparatus according to claim 2, further comprising
    an image storage unit for storing a group of at least two images generated by the image dividing unit,

wherein the drawing position calculation unit calculates a drawing position of each image of a group of at least two images stored in the image storage unit so that each of the images is to be displayed on a screen as a stereoscopic image.

5. The image processing apparatus according to claim 4,
    wherein the image dividing unit stores the generated image in the image storage unit while linking the image to information identifying a shape which is expected to be displayed on a screen as a stereoscopic.

6. The image processing apparatus according to claim 4,
    wherein the image dividing unit calculates a distance in the width direction of the group of images and a gap of drawing positions between an innermost image and a second innermost image when generating the group of images, and stores a result of calculation in the image storage unit.

7. The image processing apparatus according to claim 1,
    wherein the drawing position calculation unit calculates a drawing position of a third innermost or further inner images using the distance in the width direction of the group of images and the gap of drawing positions between the innermost image and the second innermost image.

8. The image processing apparatus according to claim 7,
    wherein the information of the gap of drawing positions is added to the group of images in advance.

9. The image processing apparatus according to claim 1,
    wherein calculation, which is performed by the drawing position calculation unit, of drawing positions of each image to be displayed as a stereoscopic image is calculating the drawing positions of images for the right and left eyes with predetermined disparity.

10. An image processing method comprising:

    calculating a drawing position of each image of a group of at least two images in a shape being divided at predetermined distance in the width direction so that each of the images is to be displayed on a screen as a stereoscopic image, the shape which is expected to be displayed on a screen as a stereoscopic image; and
    drawing each image of the group of images at the drawing position calculated in the step of calculating the drawing position.

**11.** A computer program for causing a computer to execute:

calculating a drawing position of each image of a group of at least two images in a shape being divided at predetermined distance in the width direction so that each of the images is to be displayed on a screen as a stereoscopic image, the shape which is expected to be displayed on a screen as a stereoscopic image; and drawing each image of the group of images at the drawing position calculated in the step of calculating the drawing position.

# FIG.1

OBJECT

CONVERGENCE

LEFT EYE

RIGHT EYE

IMAGE SEEN BY LEFT EYE          IMAGE SEEN BY RIGHT EYE

# FIG.2

LEFT EYE IMAGE

RIGHT EYE IMAGE

DISPARITY

# FIG.3

PERSON FEELS AS IF
OBJECT IS LOCATED
AT THIS POSITION

CONVERGENCE

LEFT EYE                    RIGHT EYE

# FIG.4

**FIG.5**

VIDEO SIGNAL → 

MEMORY 150

VIDEO SIGNAL CONTROL UNIT 120

TIMING CONTROL UNIT 140

SHUTTER CONTROL UNIT 130

DATA DRIVER 114

GATE DRIVER 113

110

112  115

BACKLIGHT CONTROL UNIT 155

100

200

214  212

EP 2 426 934 A2

# FIG.6

OBJECT DATA

120

121

DRAWING POSITION
CALCULATION UNIT

122

IMAGE DRAWING UNIT

STEREOSCOPIC IMAGE

# FIG.7A

# FIG.7B

DEPTH 0          DEPTH 1          DEPTH 2    DEPTH 3

# FIG.8

```
                    ┌─────────────┐
                    │    START    │
                    └─────────────┘
                           │
                           ▼
    ┌───────────────────────────────────────────────┐
    │ INPUT GROUP OF IMAGES OF THREE-DIMENSIONAL      │──S101
    │ MODEL DIVIDED IN THE DIRECTION OF DEPTH         │
    └───────────────────────────────────────────────┘
                           │
                           ▼
    ┌───────────────────────────────────────────────┐
    │        CALCULATE DRAWING POSITION               │──S102
    │             FOR EACH IMAGE                      │
    └───────────────────────────────────────────────┘
                           │
                           ▼
    ┌───────────────────────────────────────────────┐
    │        DRAW EACH IMAGE ON DRAWING               │──S103
    │          POSITION CALCULATED                    │
    └───────────────────────────────────────────────┘
                           │
                           ▼
                    ┌─────────────┐
                    │     END     │
                    └─────────────┘
```

**FIG.9**

DEPTH 0

DEPTH D

DEPTH D2

D: DISTANCE BETWEEN IMAGES

110

OBJECT'S DRAWING POSITION
ON SCREEN
(X2d,Y2d)

OBJECT'S THREE-DIMENSIONAL POSITION
(X3d,Y3d,Z3d)

y

z

VIEWPOINT POSITION
(0,0,0)

x

SCREEN

EP 2 426 934 A2

# FIG.10

OBJECT DATA

120

123

IMAGE DIVIDING UNIT

121

124

DRAWING POSITION
CALCULATION UNIT ← IMAGE STORAGE UNIT

122

IMAGE DRAWING UNIT

STEREOSCOPIC IMAGE

EP 2 426 934 A2

# FIG.11

START

INPUT THREE-DIMENSIONAL MODEL — S111

DIVIDE THREE-DIMENSIONAL MODEL — S112

CALCULATE DRAWING POSITION
FOR EACH IMAGE — S113

DRAW EACH IMAGE ON DRAWING
POSITION CALCULATED — S114

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9138384 A
- JP 2000036969 A
- JP 2003 A
- JP 45343 A
- JP 2010196647 A